# DEMANDE DE BREVET EUROPEEN

(11) **EP 2 511 799 A1**
(43) Date de publication de la demande: **17.10.2012**
(21) Numéro de dépôt: 12161805.2
(22) Date de dépôt: 28.03.2012
(51) Int. Cl.: G06F 3/041, G06F 3/045, G06F 3/044

(54) **Procédé de fabrication d'un capteur tactile matriciel, et capteur tactile matriciel associé**

(30) Priorité: 15.04.2011 FR 1153321; 01.07.2011 FR 1155980
(71) Demandeur: Stantum, 33300 Bordeaux (FR)
(72) Inventeur: Joguet, Pascal, 33670 SADIRAC (FR); Olivier, Julien, 33800 BORDEAUX (FR); Grossaud, Vincent, 33290 PAREMPUYRE (FR)
(74) Mandataire: Stankoff, Hélène

(57) **Abrégé**

Un capteur tactile matriciel comprend un réseau matriciel de pistes actives (24) s'étendant sur une zone de détection tactile et un réseau de pistes conductrices (21) adaptées au transfert de signaux électriques entre les pistes actives (24) et un connecteur d'interface avec un système de commande du capteur tactile.

Le réseau de pistes conductrices (21) s'étend dans la zone de détection tactile.

Utilisation dans un écran tactile.

## Description

La présente invention concerne un procédé de fabrication d'un capteur tactile matriciel.

Elle concerne également un tel capteur tactile matriciel ainsi qu'un écran tactile intégrant le capteur.

De manière générale, la présente invention concerne un capteur tactile matriciel comprenant un réseau matriciel de pistes actives s'étendant sur une zone de détection tactile.

Plus particulièrement, la présente invention trouve son application dans un capteur tactile matriciel multicontacts, adapté à la détection simultanée de plusieurs points de contact sur la zone de détection tactile.

Les pistes actives sont généralement disposées en lignes et en colonnes et constituent ainsi, à chaque intersection, une cellule de détection, active ou passive.

Un tel capteur est notamment décrit dans le document EP 1 719 047.

Le capteur tactile matriciel est ainsi muni d'un réseau de lignes et colonnes conductrices disposées en vis-à-vis. Les lignes et colonnes conductrices sont séparées par exemple par une couche de type résistive, telle qu'une couche d'air, grâce à un ensemble d'entretoises maintenant à distance les lignes des colonnes conductrices.

Ainsi, un contact entre les lignes et les colonnes conductrices apparaît aux intersections lorsqu'un utilisateur appuie sur la zone de détection tactile.

La couche d'air peut également être remplacée par une couche résistive dont la résistance varie en fonction de la pression exercée par l'utilisateur.

Un tel capteur tactile matriciel permet ainsi une détection de type résistif des zones de contact sur le capteur.

La présente invention s'applique également à un capteur tactile matriciel de type capacitif, dans lequel une couche isolante sépare les lignes et colonnes conductrices.

Quel que soit le mode de détection utilisé, un signal électrique est adressé à un ensemble de pistes actives du réseau matriciel, et par exemple les colonnes du réseau matriciel, et la position d'un contact est déduite par lecture de la variation d'une caractéristique électrique au niveau d'un autre ensemble de pistes actives, et par exemple ici les lignes.

Cette détection des caractéristiques électriques au niveau de chaque intersection ligne/colonne est réalisée en effectuant un balayage séquentiel et en mesurant la valeur d'une résistance, dans le cas d'un capteur résistif, ou la valeur d'une capacitance, dans le cas d'un capteur de type capacitif.

Un système de commande associé à ce capteur tactile permet ainsi de gérer le fonctionnement du capteur tactile, et notamment d'alimenter électriquement les pistes actives de la zone de détection tactile et de mesurer et enregistrer la variation des caractéristiques électriques.

A cet effet, un tel capteur tactile matriciel comporte un réseau de pistes conductrices adaptées au transfert de signaux électriques entre les pistes actives de la zone de détection tactile et un connecteur d'interface avec le système de commande du capteur tactile.

Traditionnellement, le réseau de pistes actives et le réseau de pistes conductrices sont disposés dans un même plan sur un substrat en matériau diélectrique.

Les pistes conductrices sont ainsi reliées d'une part à une extrémité des pistes actives et d'autre part, au connecteur d'interface avec le système de commande du capteur tactile.

Une telle disposition nécessite de prévoir un espace sur le substrat en matériau diélectrique pour positionner le réseau de pistes conductrices.

Ainsi, la zone de détection tactile proprement dite dans un plan horizontal du capteur tactile est d'autant plus diminuée que l'espace nécessaire pour positionner le réseau de pistes conductrices est important.

Certaines techniques ont été mises en oeuvre pour essayer de limiter la surface du capteur tactile nécessaire au positionnement du réseau de pistes conductrices.

Une solution consiste en particulier à déposer des pistes conductrices de très faible largeur, typiquement inférieure à 100 µm, et par exemple de l'ordre de 10 µm.

Toutefois, une telle technique fragilise le capteur tactile matriciel et implique un surcoût important au niveau des techniques de haute précision à mettre en oeuvre pour la gravure ou sérigraphie de ces pistes conductrices.

La présente invention a pour but de résoudre au moins l'un des inconvénients précités et de proposer un procédé de fabrication d'un capteur tactile matriciel possédant une zone de détection tactile optimisée en terme de surface utile pour la détection tactile.

A cet effet, la présente invention concerne un procédé de fabrication d'un capteur tactile matriciel, comprenant un réseau matriciel de pistes actives s'étendant sur une zone de détection tactile, et un réseau de pistes conductrices adaptées au transfert de signaux électriques entre les pistes actives et un connecteur d'interface avec un système de commande du capteur tactile.

Selon l'invention, ce procédé de fabrication comprend une étape de réalisation d'un ensemble de pistes conductrices s'étendant dans la zone de détection tactile.

Ainsi, en disposant les pistes conductrices dans la zone de détection tactile du capteur tactile, cette zone de détection tactile peut être optimisée dans ses dimensions, et sensiblement s'étendre sur toute la surface du capteur tactile matriciel.

Ainsi, il n'est pas nécessaire de prévoir un espace supplémentaire dans le plan du capteur tactile, adjacent au réseau matriciel de pistes actives qui s'étendent dans la zone de détection tactile, pour placer des pistes conductrices.

La zone de détection tactile peut ainsi être optimisée eu égard à l'encombrement surfacique du capteur tactile matriciel.

Selon un mode de réalisation pratique de l'invention, le procédé de fabrication comprend les étapes suivantes :
- dépôt d'un ensemble de pistes conductrices sur un substrat en matériau diélectrique, les pistes conductrices ayant une extrémité libre et une extrémité de connexion au connecteur d'interface ;
- dépôt d'une couche de matériau isolant sur les pistes conductrices, hormis sur une portion des extrémités libres ; et
- dépôt d'un ensemble de pistes actives sur la couche de matériau isolant, les pistes actives ayant respectivement des portions de jonction en contact électrique respectivement avec les extrémités libres des pistes conductrices.

Ainsi, ce procédé permet de superposer les pistes conductrices et les pistes actives dans des plans parallèles qui s'étendent dans la zone de détection tactile du capteur.

Afin d'améliorer la jonction électrique entre les pistes actives du réseau matriciel et le réseau de pistes conductrices, le procédé de fabrication comprend en outre une étape de dépôt d'un matériau conducteur sur la portion des extrémités libres des pistes conductrices avant l'étape de dépôt d'un ensemble de pistes actives.

Selon un mode de réalisation de l'invention, l'ensemble de pistes actives constitue des pistes actives du réseau matriciel s'étendant selon un premier axe dudit réseau matriciel de pistes actives.

Selon un autre mode de réalisation, l'ensemble de pistes actives constitue le réseau matriciel de pistes actives, comprenant un premier ensemble de pistes actives s'étendant selon un premier axe du réseau matriciel et un second ensemble de pistes actives s'étendant selon le second axe du réseau matriciel.

Ainsi, l'intégralité du réseau matriciel de pistes actives et du réseau de pistes conductrices peut être réalisée sur un même substrat par des étapes de dépôt successives.

Avantageusement, le procédé de fabrication comprend alors une étape de pliage du substrat en matériau diélectrique selon une ligne de pliure s'étendant entre le premier ensemble de pistes actives et le second ensemble de pistes actives.

Selon une autre caractéristique avantageuse de l'invention, la largeur des pistes conductrices est sensiblement égale à la largeur des pistes actives.

Dans la mesure où l'espace nécessaire au positionnement des pistes conductrices n'est plus limité, et peut s'étendre dans l'intégralité de la zone de détection tactile, la réalisation des pistes conductrices est facilitée en autorisant le dépôt par des techniques de sérigraphie ou de gravure classiques de pistes conductrices de largeur non négligeable, et par exemple supérieur à 100 µm.

Selon un second aspect, la présente invention concerne également un capteur tactile matriciel, comprenant un réseau matriciel de pistes actives constituant une zone de détection tactile et un réseau de pistes conductrices adaptées au transfert de signaux électriques entre les pistes actives et un connecteur d'interface avec un système de commande du capteur tactile.

Selon l'invention, le réseau de pistes conductrices s'étend dans la zone de détection tactile.

Selon un mode de réalisation de l'invention, une couche de matériau isolant est disposée entre les pistes conductrices et des pistes actives du réseau matriciel, hormis sur une zone de jonction électrique entre des portions d'extrémité libre des pistes conductrices et des portions de jonction des pistes actives.

Le capteur tactile matriciel peut être obtenu directement par la mise en oeuvre du procédé de fabrication conforme à l'invention.

Finalement, la présente invention concerne également un écran tactile comprenant un capteur tactile selon l'invention et un écran de visualisation juxtaposés.

Le capteur tactile matriciel et l'écran tactile présentent des caractéristiques et avantages analogues à ceux décrits précédemment en relation avec le procédé de fabrication.

D'autres particularités et avantages de l'invention apparaîtront encore dans la description ci-après.

Aux dessins annexés, donnés à titre d'exemples non limitatifs :
- la figure 1 illustre schématiquement un élément de structure d'un capteur tactile matriciel de l'art antérieur ;
- les figures 2A à 2D illustrent schématiquement les étapes du procédé de fabrication d'un capteur tactile matriciel conformément à un mode de réalisation de l'invention ;
- la figure 3 illustre un élément de structure d'un capteur tactile matriciel obtenu par le procédé de fabrication des figures 2A à 2D selon un premier mode de fabrication ;
- la figure 4 illustre un élément de structure d'un capteur tactile matriciel obtenu par le procédé de fabrication des figures 2A à 2D selon un deuxième mode de fabrication ;
- la figure 5 illustre en vue éclatée un écran tactile matriciel conforme à un premier mode de réalisation ;
- la figure 6 illustre en coupe schématique un écran tactile matriciel conforme à un deuxième mode de réalisation ;
- les figures 7A et 7B illustrent des éléments de structure d'un capteur tactile matriciel obtenu selon un troisième mode de fabrication ;
- les figures 8A, 8B, 8C illustrent des éléments de structures d'un capteur tactile matriciel obtenu selon un quatrième mode de fabrication ; et
- la figure 9 illustre un capteur tactile matriciel conforme à un autre mode de réalisation, dans un stade intermédiaire de fabrication.

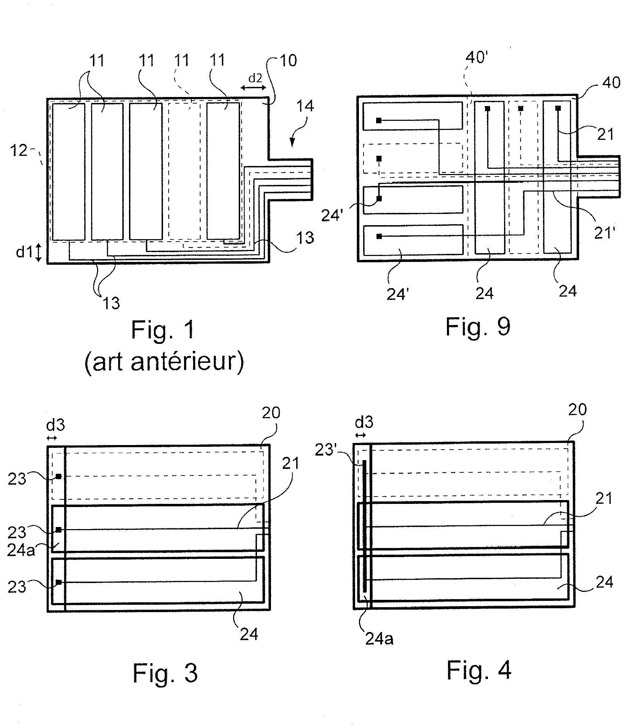

On va décrire tout d'abord en référence à la figure 1 un agencement mis en oeuvre dans un capteur tactile matriciel de l'art antérieur, tel que notamment décrit dans le document EP 1 719 047.

Dans son principe, un capteur tactile matriciel comporte sur un substrat en matériau diélectrique 10 un ensemble de pistes actives 11.

Ces pistes actives 11 sont disposées sur le substrat 10, parallèlement les unes aux autres de manière à constituer un ensemble de pistes actives 11 s'étendant selon un premier axe d'un réseau matriciel, et ici formant des colonnes à titre d'exemple non limitatif.

L'élément de structure illustré à la figure 1 est adapté à coopérer avec un autre élément de structure analogue, dans lequel des pistes actives sont disposées parallèlement les unes aux autres selon le second axe du réseau matriciel, et ici formant des lignes à titre d'exemple.

Le réseau matriciel de pistes actives est ainsi constitué par mise en vis-à-vis des deux éléments de structure.

Le réseau matriciel de pistes actives constitue la zone de détection tactile du capteur tactile matriciel.

Ici, en relation avec la figure 1, la zone de détection tactile 12 correspond sensiblement à la surface occupée par l'ensemble de pistes actives 11 dans le plan du substrat 10.

Par ailleurs, le substrat 10 comporte un réseau de pistes conductrices 13 adaptées au transfert de signaux électriques entre les pistes actives 11 et un connecteur d'interface 14 destiné à relier l'ensemble à un système de commande (non représenté) du capteur tactile matriciel.

Ces pistes conductrices 13 sont nécessaires à la fois pour alimenter par un signal électrique chaque piste active 11 du réseau matriciel et pour transmettre le signal électrique parcourant chacune des pistes actives 11 lors d'un balayage séquentiel du réseau matriciel de pistes actives du capteur tactile matriciel.

On se reportera avantageusement au document EP 1 719 047 pour la description détaillée du fonctionnement d'un tel capteur tactile matriciel.

Afin de réaliser le transfert des signaux électriques, il est nécessaire de prévoir autant de pistes conductrices 13 que de pistes actives 11 à connecter.

Comme bien illustré à la figure 1, un espace est alors nécessaire autour de la zone de détection tactile 12 pour positionner le réseau de pistes conductrices 13.

Cet espace, appelé *bezel* en terminologie anglo-saxonne, limite ainsi la surface utile du capteur tactile matriciel, en diminuant d'autant la zone de détection tactile 12 pour une taille de substrat 10 donnée.

Ainsi, comme bien illustré à la figure 1, deux zones inactives schématisées par les distances d1 et d2 doivent être réservées sur le substrat 10 afin de positionner le réseau de piste conductrices 13.

Les distances d1 et d2 sont naturellement proportionnelles au nombre de pistes actives 11 du réseau matriciel du capteur tactile matriciel et correspondant ici à la largeur des bandes s'étendant parallèlement à des bords du substrat 10, autour de la zone de détection tactile.

Ainsi, plus le nombre de pistes actives 11 sera élevé, pour un capteur de grande taille et/ou de haute résolution, plus la surface inactive autour de la zone de détection tactile 12 sera importante.

A titre d'exemple non limitatif, dans un capteur de l'art antérieur, pour une taille du capteur tactile matriciel de l'ordre de 10 pouces, les distances d1 et d2 sont au minimum égales à environ à 1 cm si des techniques de gravure ou de dépôt de haute précision sont utilisées pour déposer des pistes conductrices fines, de largeur de l'ordre de 10 µm.

Si pour diminuer le coût de fabrication d'un tel capteur tactile, les pistes conductrices sont plus larges, et par exemple de l'ordre de 100 µm, l'espace ou bezel nécessaire pour disposer ces pistes autour de la zone tactile matricielle s'en trouve augmenté.

A titre d'exemple, on considère un écran tactile de 10 pouces ayant une résolution classique, à savoir un réseau de pistes actives composé de 150 lignes et 90 colonnes, chaque piste active ayant une largeur de 1, 2 mm.

Pour des pistes conductrices de 100 µm de largeur, séparées entre elles d'un espace de 100 µm, l'espace ou bezel nécessaire pour placer 150 pistes conductrices, correspondant aux 150 lignes des pistes actives, représente une largeur de l'ordre de 3 cm (150 x 200 µm = 3 cm).

De même, l'espace ou bezel nécessaire pour disposer 90 pistes conductrices, correspondant aux 90 colonnes, est égal à 1,8 cm (90 x 200 µm = 1,8 cm).

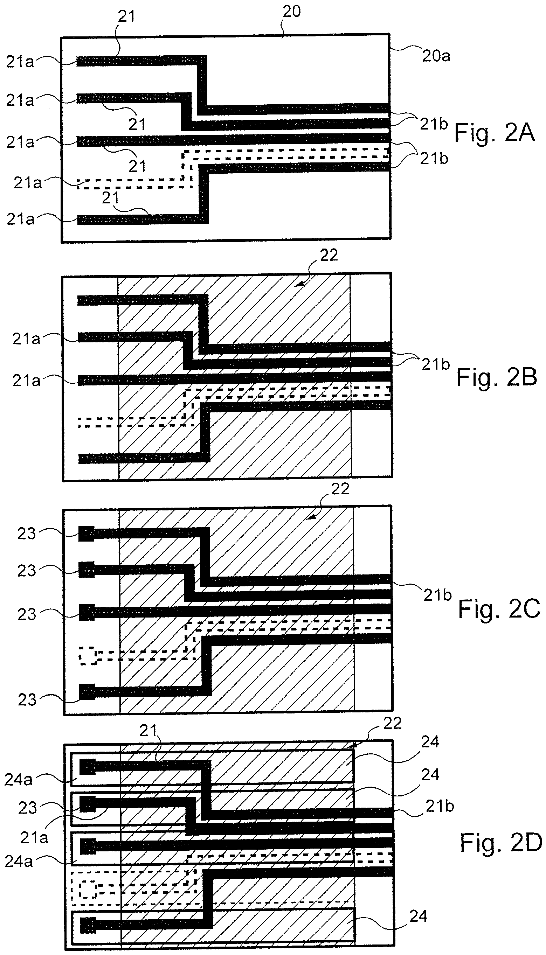

On va décrire à présent en référence aux figures 2A à 2D un procédé de fabrication d'un capteur tactile matriciel conformément à un mode de réalisation de l'invention, permettant de limiter la présence de surfaces inactives autour de la zone de détection tactile 12 du capteur tactile matriciel.

Ce procédé de fabrication comporte tout d'abord, comme illustré à la figure 2A, une étape de dépôt sur un substrat en matériau diélectrique 20 d'un ensemble de pistes conductrices 21.

Typiquement, le substrat en matériau diélectrique 20 peut être une plaque de verre rigide ou un film souple par exemple en PET (Polyéthylène téréphtalate).

L'agencement, la largeur et le nombre de pistes conductrices 21 sont déterminés en fonction du réseau matriciel de pistes actives à commander dans le capteur tactile matriciel en cours de fabrication.

De préférence, les pistes conductrices 21 sont réalisées par sérigraphie d'un métal, et par exemple en argent.

La largeur des pistes conductrices ainsi réalisées en argent dépendra notamment des contraintes de transparence associées au capteur tactile matriciel.

Si ce capteur tactile matriciel doit être transparent, par exemple pour être disposé au dessus d'un écran, la largeur des pistes conductrices 21 doit être suffisamment fine pour ne pas nuire à la transparence du capteur, et par exemple inférieure à 10 µm.

En revanche, pour un capteur tactile matriciel opaque, la largeur de ces pistes conductrices 21 n'est pas critique et peut être comprise entre 100 et 200 µm, voire être du même ordre de grandeur que la largeur des pistes actives, et par exemple comprise entre 1 et 1,5 mm.

L'épaisseur des pistes conductrices 21 peut être comprise entre 20 et 100 µm, et par exemple égale à 50 µm.

Chaque piste conductrice 21 a une extrémité libre 21 a destinée ultérieurement à être reliée respectivement à une piste active du réseau matriciel du capteur tactile matriciel.

Par ailleurs, chaque piste conductrice 21 a une extrémité de connexion 21b, opposée à l'extrémité libre 21a, destinée à être connectée ultérieurement à un connecteur d'interface.

De préférence, afin de faciliter la connexion à un connecteur d'interface ultérieurement, les extrémités de connexion 21 b du réseau de pistes conductrices 21 s'étendent sur le substrat 20 de manière à venir en contact avec un bord 20a de ce substrat 20.

Comme illustré à la figure 2B, le procédé de fabrication comporte ensuite une étape de dépôt d'une couche de matériau isolant 22 sur les pistes conductrices 21.

Afin de permettre la connexion ultérieure des pistes conductrices 21 avec les pistes actives du réseau matriciel, la couche de matériau isolant 22 ne s'étend pas sur une portion des extrémités libres 21 a de chaque piste conductrice 21.

La portion des extrémités libres 21 a non recouverte a une longueur d'environ 1 mm pour permettre la connexion ultérieure des pistes actives.

En outre, dans ce mode de réalisation, la couche de matériau isolant 22 ne s'étend pas non plus sur une portion des extrémités de connexion 21 b des pistes conductrices 21, destinées à être connectées ultérieurement à un connecteur d'interface.

De même, la longueur de la portion des extrémités de connexion 21 b non recouverte peut être d'environ 1 mm, pour permettre la connexion ultérieure au connecteur d'interface.

La couche de matériau isolant 22 peut être réalisée à partir d'un isolant électrique adhésif du type OCA (acronyme du terme anglais Optically Clear Adhesive).

La couche en matériau isolant 22 est alors simplement collée sur le réseau de pistes conductrices 22, hormis les portions des extrémités libres 21a.

A titre d'exemple non limitatif, l'épaisseur de la couche de matériau isolant 22 peut être comprise entre 10 et 200 µm, et de préférence égale à 10 µm.

Bien entendu, d'autres types de matériau électriquement isolant pourraient être utilisés pour réaliser la couche de matériau isolant 22.

A titre d'exemple non limitatif, il est possible d'utiliser un dépôt par sérigraphie d'un matériau isolant du type Silastic, commercialisé par la société Dow Corning, ou encore du type QSil 216, QSil 16, QSil 218, commercialisé par la société Quantum Silicones.

Si le capteur tactile matriciel doit être transparent, le matériau utilisé pour réaliser la couche en matériau isolant 22 doit répondre à ce critère de transparence et être limité en épaisseur afin de ne pas nuire à la transparence du capteur.

On a illustré ensuite à la figure 2C une étape de dépôt d'un matériau conducteur sur la portion des extrémités libres 21 a des pistes conductrices 21.

Cette étape de dépôt d'un matériau conducteur est optionnelle et vise à améliorer la connexion ultérieure des pistes conductrices 21 avec les pistes actives du réseau matriciel du capteur tactile matriciel.

Le dépôt de matériau conducteur permet ainsi de préparer la jonction entre les pistes conductrices 21 et les pistes actives sur les extrémités libres 21 a, non recouvertes par la couche d'un matériau isolant 22.

Ce dépôt d'un matériau conducteur peut consister par exemple en le dépôt de points d'argent 23 déposés par sérigraphie sur la zone de jonction électrique.

On peut également utiliser un film ou une pâte conductrice anisotropique (en anglais ACF pour Anisotropic Conductive Film ou ACP pour Anisotropic Conductive Paste).

L'utilisation de tels films conducteurs permet, grâce à leur conductivité en Z, de simplifier l'étape de dépôt d'un matériau conducteur en autorisant le dépôt d'une bande 23' (voir figure 4) sur l'ensemble des extrémités libres 21a des pistes conductrices 21 au lieu du dépôt de points isolés 23 sur chaque extrémité libre 21a de chaque piste conductrice 21.

Finalement, comme illustré à la figure 2D, le procédé de fabrication comporte une étape de dépôt d'un ensemble de pistes actives 24 sur la couche de matériau isolant 22.

Comme bien illustré à la figure 2D, dans ce mode de réalisation, chaque piste active 24 a une portion de jonction 24a qui s'étend au-delà de la couche isolante 22 pour venir en contact électrique respectivement avec les extrémités libres 21 a des pistes conductrices 21.

Les pistes actives 24 peuvent être déposées également par sérigraphie et être réalisée en matériau conducteur transparent du type ITO (Oxyde d'Indium-Etain).

L'épaisseur des pistes actives 24 peut être du même ordre de grandeur que celle des pistes conductrices 21, et par exemple comprise entre 20 et 100 µm, et de préférence égale à 50 µm.

On obtient ainsi, comme illustré aux figures 3 et 4, un substrat 20 recouvert d'un ensemble de pistes actives 24 placées au-dessus d'un réseau de pistes conductrices 21, permettant ainsi d'augmenter la surface utile du capteur tactile matriciel, c'est-à-dire la zone de détection tactile.

On notera que pour certaines applications, dans lesquelles le capteur tactile matriciel doit être transparent, le procédé de fabrication décrit précédemment permet de conserver la transparence du capteur tactile matriciel au moins dans la zone de détection tactile.

On notera que l'étape de dépôt d'un matériau conducteur 23, 23' sur les extrémités libres 21 a des pistes conductrices peut nuire à la transparence du capteur et ne sera mise en oeuvre qu'en cas de nécessité.

En tout état de cause, même si la jonction réalisée par un dépôt de points 23 en matériau conducteur ou d'une bande 23' en matériau conducteur limite quelque peu la transparence du capteur tactile matriciel, cette zone de jonction est très limitée par rapport aux dimensions de la zone de détection tactile proprement dite.

Ainsi, cette zone inactive, caractérisée par la largeur d3 sur les figures 3 et 4, peut constituer une bande de l'ordre de 0,2 mm de large, restant ainsi très inférieure aux dimensions d1 et d2, d'au moins 1 cm, des bandes inactives nécessaires pour le positionnement des pistes conductrices dans l'art antérieur.

Comme bien illustré aux figures 3 et 4, l'ensemble des pistes actives 24 ainsi réalisé sur le substrat 20 constitue des pistes actives 24 du réseau matriciel s'étendant selon un premier axe du réseau matriciel de pistes actives, et ici par exemple, constituant des lignes de ce réseau matriciel.

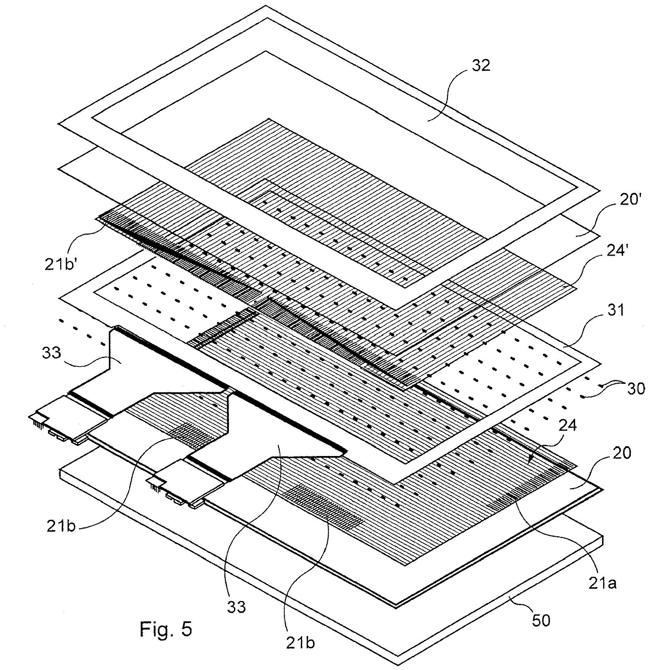

Le procédé de fabrication décrit précédemment est alors mis en oeuvre sur un second substrat en matériau diélectrique de façon à réaliser de manière analogue un autre ensemble de pistes actives 24', comme illustré à la figure 5, constituant des pistes actives 24' s'étendant selon un second axe du réseau matriciel de pistes actives.

Typiquement, le premier ensemble de pistes actives 24 s'étend sur un substrat rigide en matériau diélectrique 20, du type une surface de verre.

A contrario, le second ensemble de pistes actives 24' est déposé sur un substrat souple en matériau diélectrique 20', du type PET.

Le procédé de fabrication comporte alors une étape de fixation des deux substrats 20, 20' en regard l'un de l'autre afin de disposer les pistes actives 24, 24' en regard les unes des autres pour constituer le réseau matriciel de pistes actives 24, 24' du capteur tactile matriciel.

De manière connue dans ce type de capteur tactile matriciel, un réseau d'entretoises 30 est disposé entre les ensembles de pistes actives 24, 24' afin de maintenir l'espacement nécessaire entre ces pistes actives 24, 24'.

Par ailleurs, la fixation des substrats 20, 20' est réalisée ensuite de manière connue, au moyen d'une couche adhésive 31.

Un tel capteur tactile matriciel peut en outre être revêtu d'une couche adhésive de décor 32, fixée par collage au-dessus du substrat en matériau diélectrique 20'.

Enfin, la connexion avec un système de commande (non représentée) est réalisée grâce à des connecteurs d'interface 33, permettant de relier les extrémités de connexion 21 b, 21'b des pistes conductrices (non représentées à la figure 5 pour simplifier la figure).

A titre d'exemple non limitatif, les connecteurs d'interface sont ici au nombre de deux.

Un tel capteur tactile matriciel, transparent, peut être associé à un écran 50 positionné sous ce capteur, et par exemple un écran rigide du type LCD.

On notera que la présente invention n'est pas limitée à la réalisation d'un capteur tactile matriciel transparent mais peut également s'appliquer à un capteur tactile opaque, celui-ci pouvant être positionné sous un écran souple.

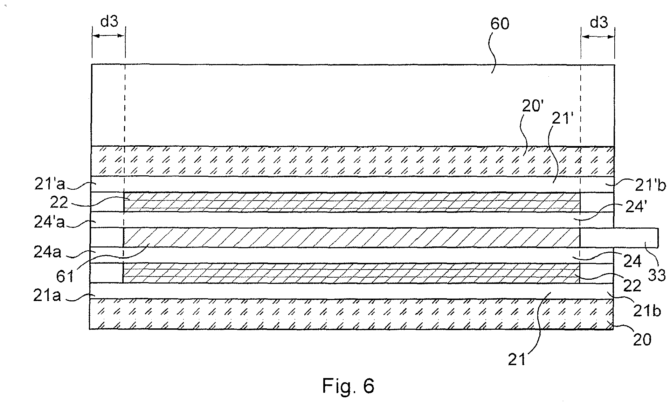

On a illustré à la figure 6 une vue en coupe d'un écran tactile dans lequel un écran souple 60 est placé au-dessus d'un capteur tactile matriciel qui peut alors être opaque.

Dans son principe, le capteur tactile matriciel est identique à celui décrit précédemment en référence à la figure 5.

Toutefois, dans ce mode de réalisation, une couche résistive 61 est ajoutée entre les pistes actives 24, 24', remplaçant ainsi les entretoises 30. Cette couche résistive peut avoir une résistance qui varie en fonction de la pression exercée par l'utilisateur sur l'écran 60.

On notera comme bien illustré à la figure 6 que seul un espace ou bezel, schématisé par la distance d3, est nécessaire dans ce type de capteur tactile matriciel pour permettre la jonction des extrémités libres 21 a, 21'a des pistes conductrices 21 avec les extrémités de connexion 24a, 24'a des pistes actives 24.

De même, un espace est ménagé le long d'un bord des substrats en matériau diélectrique 20, 20' pour permettre la connexion au niveau des extrémités de connexion 21b, 21'b des pistes conductrices 21 avec un connecteur d'interface 33.

Bien entendu, bien que les dimensions d3 aient été représentées de manière identique sur la figure 6, la largeur de l'espace ou bezel nécessaire pour la connexion des pistes actives 24, 24' et des pistes conductrices 21, 21', d'une part, et celle nécessaire pour la connexion des pistes conductrices 21, 21' avec un connecteur d'interface 33 d'autre part, peuvent être différentes.

On notera que dans ce mode de réalisation, le capteur tactile matriciel étant opaque, la largeur des pistes conductrices 21, 21' n'est pas critique et peut être du même ordre que celle des pistes actives 24, 24', et par exemple égale à 1,2 mm.

L'utilisation de telles largeurs de pistes conductrices dans un capteur tactile matriciel de l'art antérieur ne serait en pratique pas envisageable, nécessitant un espace ou bezel autour de la zone tactile de détection d'au moins 7 cm.

En effet, la disposition par exemple de 90 pistes conductrices de largeur de 1,2 mm et espacées les unes des autres de 0,3 mm conduit à prévoir une bande ou bezel ayant une largeur de l'ordre de 13,5 cm (90 x 1,5 mm = 13, 5 cm).

Même en répartissant ces pistes conductrices de part et d'autre de la zone tactile de détection, il est nécessaire de prévoir une bande d'au moins 7 cm de large pour le passage des pistes conductrices.

Une telle perte de surface utile n'est pas envisageable pour les applications usuelles d'écran tactile, par exemple de 10 pouces.

Grâce à l'invention telle que décrite précédemment, la largeur de la bande ou bezel nécessaire de part et d'autre de la zone de détection tactile peut être limitée à quelques millimètres, et par exemple être comprise entre 1 et 5 mm, et de préférence être égale à 1 mm.

Bien entendu, l'invention n'est pas limitée au mode de réalisation décrit précédemment en relation avec les figures 3 et 4.

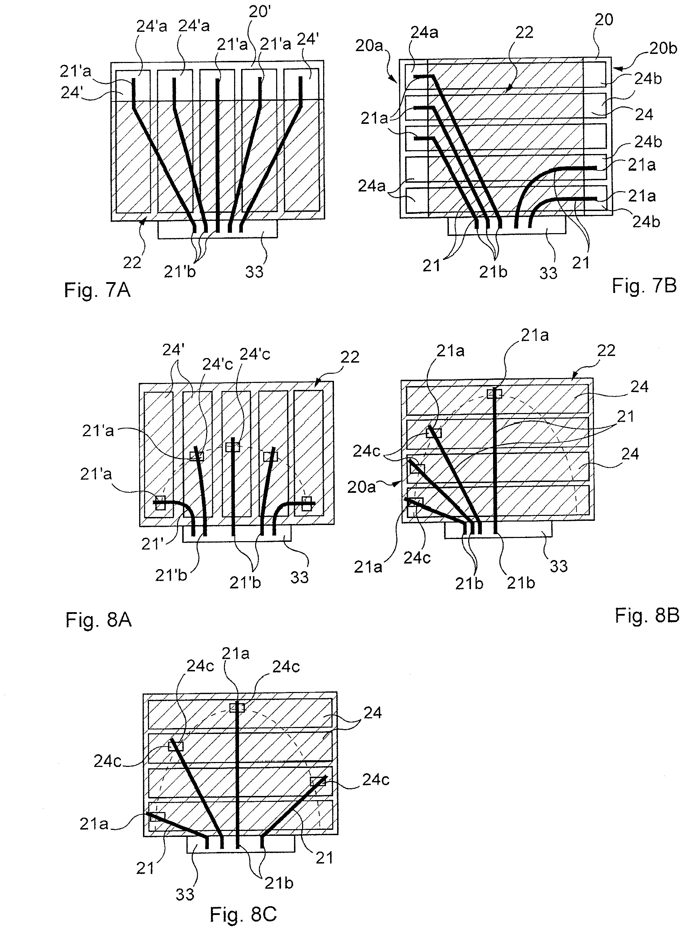

En particulier, comme illustré aux figures 7A et 7B, le positionnement des portions de jonction entre les pistes actives 24, 24' et les extrémités libres 21a, 21'a des pistes conductrices 21, 21' peut être différent, notamment en vue d'optimiser les chemins électriques des pistes conductrices 21, 21'.

Les figures 7A et 7B illustrent dans un troisième mode de réalisation, deux éléments de structure d'un capteur tactile matriciel, destinés à être positionnés en vis-à-vis l'un de l'autre pour constituer le réseau matriciel de pistes actives 24, 24'.

Ainsi, un premier substrat 20 supporte des pistes actives 24 s'étendant selon un premier axe du réseau matriciel, et ici par exemple des lignes, et un second substrat 20' supporte des pistes actives 24' s'étendant selon un second axe du réseau matriciel et ici par exemple des colonnes.

Comme illustré à la figure 7A, le second substrat 20' présente un agencement des pistes conductrices 21', des pistes actives 24' et de la couche isolante 22 sensiblement identique à celui décrit précédemment en relation avec la figure 3.

En revanche, cet agencement est modifié pour le premier substrat 20 supportant les pistes actives 24 constituant des lignes.

Dans ce mode de réalisation, les pistes conductrices 21 s'étendent à partir de leur extrémité de connexion 21b, en partant du connecteur d'interface 33, dans des directions différentes. Ce mode de réalisation trouve son intérêt lorsque les pistes conductrices 21 s'étendent à partir du connecteur d'interface 33 dans une direction sensiblement perpendiculaire à la direction des pistes actives 24 supportées par le premier substrat en matériau diélectrique 20.

Ainsi, la couche de matériau isolant 22 est déposée sur le premier substrat 20 et les pistes conductrices 21 de manière à laisser libre une portion des extrémités libres 21a des pistes conductrices 21.

Les pistes actives 24 déposées sur la couche de matériau isolant 22 sont disposées de telle sorte que des portions de jonction 24a, 24b s'étendent au-delà de la couche de matériau isolant 22 et viennent en contact électrique avec les extrémités libres 21 a des pistes conductrices 21.

Comme bien illustré à la Figure 7B, ces portions de jonction 24a, 24b ne sont pas toutes disposées à proximité d'un même bord latéral 20a du premier substrat 20, mais sont disposées sensiblement pour moitié à proximité d'un premier bord latéral 20a du substrat 20 et pour l'autre moitié à proximité d'un second bord latéral 20b du substrat 20, opposé au premier bord latéral 20a.

Ainsi, la longueur des pistes conductrices 21 s'étendant entre le connecteur d'interface 33 et leur extrémité libre 21a, destinée à venir en contact électrique avec les pistes actives 24, est sensiblement identique. Ainsi, l'ensemble des pistes conductrices 21 présente une résistance électrique sensiblement équivalente, ce qui facilite le calibrage du capteur tactile matriciel ainsi obtenu.

Dans ce mode de réalisation, les portions de jonction 24a, 24b sont situées aux extrémités 24a, 24b des pistes actives 24.

Une première série de pistes actives 24 comporte ainsi une portion de jonction 24a au niveau de son extrémité 24a adjacente au premier bord latéral 20a du substrat 20.

Une seconde série de pistes actives 24 comporte une portion de jonction 24b au niveau de son extrémité 24b adjacente au second bord latéral 20b du support 20.

Ainsi, lors de la réalisation des pistes actives 24 sur la couche de matériau isolant 22, les extrémités 24a, 24b des pistes actives s'étendent au-delà de la couche de matériau isolant 22, de part et d'autre de celle-ci.

En pratique, cette couche de matériau isolant 22 est disposée sur le substrat 20, en laissant un espace libre à proximité des bords latéraux 20a, 20b du substrat 20 en matériau diélectrique.

Un quatrième mode de réalisation est également illustré aux figures 8A à 8C permettant également d'optimiser les chemins électriques entre les différentes pistes actives 21.

Ce quatrième mode de réalisation permet également en outre de diminuer la quantité de matière à utiliser pour la réalisation des pistes conductrices 21, 21'.

Dans ce mode de réalisation, la longueur des pistes conductrices 21, 21' est diminuée de telle sorte que la portion de jonction entre ces pistes conductrices 21, 21' et les pistes actives 24, 24' n'est plus disposée aux extrémités des pistes actives 24, 24'.

Ainsi, dans ce quatrième mode de réalisation, les pistes conductrices 21, 21' sont disposées selon un schéma prédéterminé sur le substrat en matériau diélectrique 20, 20'.

Puis la couche de matériau isolant 22 est déposée en utilisant un masque perforé, permettant de créer des trous dans la couche isolante au niveau des extrémités 21 a, 21'a des pistes conductrices, de manière à réaliser la jonction ultérieure avec les pistes actives 24, 24' disposées au-dessus de la couche de matériau isolant 22.

On a illustré à la figure 8A un exemple de réalisation sur un second substrat 20' destiné à supporter des pistes actives 24' s'étendant selon une direction parallèle à la direction globale des pistes conductrices 21' connectées au connecteur d'interface 33.

Ces pistes conductrices 21' sont ainsi disposées à partir du connecteur d'interface 33 de telle sorte que leur extrémité libre 21'a se trouve sensiblement disposée sur une courbe correspondant sensiblement à une portion de cercle centré sur le connecteur d'interface 33.

Ainsi, la longueur des pistes conductrices 21' entre le connecteur d'interface 33 et leur extrémité libre 21'a est sensiblement identique d'une piste conductrice à l'autre.

On a illustré aux figure 8B et 8C deux agencements alternatifs selon un principe analogue, pour le premier substrat en matériau diélectrique 20 destiné à supporter des pistes actives 24 sensiblement perpendiculaires aux pistes conductrices 21 s'étendant à partir du connecteur d'interface 33.

Comme précédemment, les extrémités libres 21 a des pistes conductrices 21 sont disposées sur une courbe, dont le centre correspond sensiblement à la position du connecteur d'interface 33.

Ainsi, les extrémités libres 21 a des pistes conductrices 21 sont disposées régulièrement sur une courbe de manière à présenter des longueurs sensiblement identiques entre le connecteur 33 et l'extrémité libre 21 a de chaque piste conductrice 21.

A la figure 8B, les extrémités libres 22a des pistes conductrices 21 sont toutes disposées d'un même côté du substrat 20, à proximité d'un bord latéral 20a du substrat.

A la figure 8C, alternativement, les extrémités libres 21 a des pistes conductrices 21 sont réparties sur tout le substrat 20 facilitant ainsi la répartition des extrémités de connexion 21 b au niveau du connecteur d'interface 33.

Les portions de jonction 24c, 24'c sont ainsi placées dans différentes zones des pistes actives 24, 24', et ne sont plus limitées aux extrémités 24a, 24'a de ces pistes actives 24, 24'.

Cet agencement permet de diminuer la quantité de matière à déposer pour la réalisation des pistes conductrices 21, 21'. Il facilite également le calibrage du capteur tactile obtenu dès lors que les longueurs de pistes conductrices 21, 21' sont sensiblement identiques pour la connexion de chaque ensemble de pistes actives 24, 24'.

On a illustré à la figure 9 un autre mode de réalisation d'un capteur tactile matriciel conforme à l'invention.

Dans cet autre mode de réalisation, l'ensemble des pistes actives 24, 24' sont déposées lors d'une même étape de dépôt et constitue le réseau matriciel de pistes actives, comprenant un premier ensemble de pistes actives 24 s'étendant selon un premier axe du réseau matriciel et un second ensemble de pistes actives 24' s'étendant selon le second axe du réseau matriciel.

Comme illustré à la figure 9, le substrat en matériau diélectrique 40 est alors un substrat unique réalisé en un matériau diélectrique souple, formant un support souple, du type d'un film en PET.

Lors du procédé de fabrication décrit précédemment en référence aux figures 2A et 2D, l'ensemble du réseau de pistes conductrices 21, 21' est réalisé sur le support souple 40.

De même, après dépôt d'une couche en matériau isolant 22, l'ensemble des pistes actives 24, 24' est déposé par une même étape de sérigraphie, selon deux directions perpendiculaires l'une à l'autre, correspondant ultérieurement aux deux axes du réseau matriciel de pistes actives 24, 24'.

Ainsi, le substrat en matériau diélectrique 40 comporte deux faces 40a, 40b qui s'étendent dans un même plan dans le stade intermédiaire de fabrication tel qu'illustré à la figure 9.

La première face 40a supporte les pistes actives 24 s'étendant selon un premier axe sur réseau matriciel et la seconde face 40b supporte des pistes actives 24' s'étendant selon un second axe du réseau matriciel.

Le procédé comporte alors une étape de pliage du substrat en matériau diélectrique 40, selon une ligne de pliure 40' s'étendant entre le premier ensemble de pistes actives 24 et le second ensemble de pistes actives 24', c'est-à-dire entre les deux faces 40a, 40b du substrat en matériau diélectrique 40.

Le pliage du substrat en matériau diélectrique souple 40 permet de disposer en vis-à-vis les deux faces 40a, 40b du substrat 40 et ainsi de placer en regard les deux ensembles de pistes actives 24, 24' de manière à réaliser le réseau matriciel de pistes actives nécessaire au fonctionnement du capteur tactile matriciel.

Grâce aux dispositions des pistes conductrices 21, 21' sous les ensembles de pistes actives 24, 24', la zone de détection tactile d'un tel capteur tactile matriciel est optimisée, en évitant l'espace nécessaire au positionnement des pistes conductrices autour des pistes actives.

Bien entendu, l'exemple de réalisation illustré à la figure 9 n'est pas limitatif et des dispositions alternatives de pistes conductrices 21 pourraient également être mises en oeuvre comme décrit précédemment en relation avec les figures 7A, 7B et 8A à 8C.

Comme précédemment, un tel capteur tactile matriciel peut être utilisé avec un écran de visualisation juxtaposé.

Bien entendu, la présente invention n'est pas limitée aux exemples de réalisation décrits précédemment.

En particulier, l'exemple de réalisation décrit précédemment vise un capteur tactile matriciel de type résistif. Bien entendu, l'invention pourrait s'appliquer à un capteur tactile matriciel de type capacitif, les entretoises étant remplacées par une couche isolante séparant les pistes actives 24, 24'.

En outre, le procédé de fabrication décrit précédemment n'est pas limitatif et d'autres types de procédé de fabrication peuvent être mis en oeuvre pour permettre la réalisation d'un ensemble de pistes conductrices qui s'étendent dans la zone de détection tactile.

De même, les pistes conductrices pourraient être réalisées directement à partir d'un matériau conducteur transparent, du type ITO.

## Revendications

1. Procédé de fabrication d'un capteur tactile matriciel, comprenant un réseau matriciel de pistes actives (24, 24') s'étendant dans une zone de détection tactile, et un réseau de pistes conductrices (21, 21') adaptées au transfert de signaux électriques entre lesdites pistes actives (24, 24') et un connecteur d'interface (33) avec un système de commande dudit capteur tactile, **caractérisé en ce qu'**il comprend une étape de réalisation d'un ensemble de pistes conductrices (21, 21') s'étendant dans ladite zone de détection tactile.

2. Procédé de fabrication conforme à la revendication 1, **caractérisé en ce qu'**il comprend les étapes suivantes :
- dépôt d'un ensemble de pistes conductrices (21, 21') sur un substrat en matériau diélectrique (20, 20' ; 40), lesdites pistes conductrices (21, 21') ayant une extrémité libre (21a, 21'a) et une extrémité de connexion (21 b, 21'b) audit connecteur d'interface (33) ;
- dépôt d'une couche de matériau isolant (22) sur lesdites pistes conductrices (21, 21'), hormis sur une portion desdites extrémités libres (21 a, 21'a) ; et
- dépôt d'un ensemble de pistes actives (24, 24') sur ladite couche de matériau isolant (22), lesdites pistes actives (24, 24') ayant respectivement des portions de jonction (24a, 24'a, 24b, 24c, 24'c) en contact électrique respectivement avec lesdites extrémités libres (21a, 21'a) des pistes conductrices (21, 21').

3. Procédé de fabrication conforme à la revendication 2, **caractérisé en ce qu'**il comprend en outre une étape de dépôt d'un matériau conducteur (23, 23') sur la portion desdites extrémités libres (21a, 21'a) des pistes conductrices (21, 21') avant l'étape de dépôt d'un ensemble de pistes actives (24, 24').

4. Procédé de fabrication conforme à l'une des revendications 2 ou 3, **caractérisé en ce que** ledit ensemble de pistes actives (24) constitue des pistes actives (24) du réseau matriciel s'étendant selon un premier axe dudit réseau matriciel de pistes actives.

5. Procédé de fabrication conforme à la revendication 4, **caractérisé en ce que** lesdites étapes sont mises en oeuvre sur un premier substrat (20) et un second substrat (20') en matériau diélectrique, et **caractérisé en ce qu'**il comprend en outre une étape de fixation desdits premier et second substrats (20, 20') l'un à l'autre, lesdits ensembles de pistes actives (24, 24') desdits premier et second substrats (20, 20') s'étendant respectivement selon un premier axe et un second axe du réseau matriciel de pistes actives.

6. Procédé de fabrication conforme à l'une des revendications 2 ou 3, **caractérisé en ce que** ledit ensemble de pistes actives (24, 24') constitue le réseau matriciel de pistes actives, comprenant un premier ensemble de pistes actives (24) s'étendant selon un premier axe du réseau matriciel et un second ensemble de pistes actives (24') s'étendant selon le second axe du réseau matriciel.

7. Procédé de fabrication conforme à la revendication 6, **caractérisé en ce que** le substrat en matériau diélectrique (40) est un support souple.

8. Procédé de fabrication conforme à l'une des revendications 6 ou 7, **caractérisé en ce qu'**il comprend en outre une étape de pliage dudit substrat en matériau diélectrique (40) selon une ligne de pliure (40') s'étendant entre ledit premier ensemble de pistes actives (24) et ledit second ensemble de pistes actives (24').

9. Procédé de fabrication conforme à l'une des revendications 2 à 8, **caractérisé en ce que** la couche de matériau isolant (22) a une épaisseur comprise entre 20 et 200 µm.

10. Procédé de fabrication conforme à l'une des revendications 1 à 9, **caractérisé en ce que** ledit ensemble de pistes conductrices (21, 21') est réalisé par sérigraphie d'un métal.

11. Procédé de fabrication conforme à l'une des revendications 1 à 10, **caractérisé en ce que** la largeur desdites pistes conductrices (21, 21') est sensiblement égale à la largeur des pistes actives (24, 24').

12. Capteur tactile matriciel, comprenant un réseau matriciel de pistes actives (24, 24') s'étendant dans une zone de détection tactile et un réseau de pistes conductrices (21, 21') adaptées au transfert de signaux électriques entre lesdites pistes actives (24, 24') et un connecteur d'interface (33) avec un système de commande dudit capteur tactile, **caractérisé en ce que** ledit réseau de pistes conductrices (21, 21') s'étend dans ladite zone de détection tactile.

13. Capteur tactile matriciel conforme à la revendication 12, **caractérisé en ce qu'**une couche de matériau isolant (22) est disposée entre les pistes conductrices (21, 21') et des pistes actives (24, 24') du réseau matriciel, hormis sur une zone de jonction électrique entre des portions d'extrémité libre (21a, 21'a) desdites pistes conductrices (21, 21') et des portions de jonction (24a, 24'a, 24'b, 24c, 24'c) desdites pistes actives (24, 24').

14. Capteur tactile matriciel conforme à l'une des revendications 12 ou 13, **caractérisé en ce qu'**il comprend deux substrats (20, 20') en matériau diélectrique disposés en regard l'un de l'autre, le premier substrat (20) supportant des pistes actives (24) s'étendant selon un premier axe du réseau matriciel et le second substrat (20') supportant des pistes actives (24') s'étendant selon un second axe du réseau matriciel.

15. Capteur tactile matriciel conforme à l'une des revendications 12 ou 13, **caractérisé en ce qu'**il comprend un substrat unique (40) réalisé en matériau diélectrique souple, ledit substrat (40) étant plié et comportant deux faces (40a, 40b) en vis-à-vis, une première face (40a) supportant des pistes actives (24) s'étendant selon un premier axe du réseau matriciel et une seconde face (40b) supportant des pistes actives (24') s'étendant selon un second axe du réseau matriciel.

16. Ecran tactile, **caractérisé en ce qu'**il comprend un capteur tactile conforme à l'une des revendications 12 à 15 et un écran de visualisation juxtaposés (50, 60).
